# EUROPÄISCHE PATENTSCHRIFT

(11) **EP 0 978 424 B1**
(45) Veröffentlichungstag und Bekanntmachung des Hinweises auf die Patenterteilung: **18.06.2003**
(21) Anmeldenummer: 99115036.8
(22) Anmeldetag: 03.08.1999
(51) Int. Cl.: B60R 21/26

(54) **Gasgenerator mit steuerbarer Flüssigkeitseinspritzung**
Gas generator with controlable liquid injection
Générateur de gaz avec injection de liquide contrôlable

(30) Priorität: 04.08.1998 DE 29813961 U; 23.03.1999 DE 19913145
(43) Veröffentlichungstag der Anmeldung: 09.02.2000
(73) Patentinhaber: TRW Airbag Systems GmbH, 84544 Aschau am Inn (DE)
(72) Erfinder: Huber, Johann, 84431 Rattenkirchen (DE); Lindner, Markus, 75217 Birkenfeld (DE); Gabler, Michael, 84453 Mühldorf (DE); Ragner, Herbert, 84095 Furth (DE); Winterhalder, Marc, 84518 Garching an der Alz (DE)
(74) Vertreter: Kitzhofer, Thomas, Dipl.-Ing.

(56) Entgegenhaltungen:
- DE-U- 29 821 232
- US-A- 3 692 495
- US-A- 3 810 655
- US-A- 3 882 673
- US-A- 5 601 310
- PATENT ABSTRACTS OF JAPAN vol. 016, no. 148 (C-0928), 13. April 1992 (1992-04-13) & JP 04 006192 A (DAICEL CHEM IND LTD), 10. Januar 1992 (1992-01-10)

## Beschreibung

Die Erfindung betrifft einen Gasgenerator für ein Sicherheitssystem, insbesondere für ein Fahrzeuginsassen-Rückhaltesystem, mit einer treibstoffgefüllten Brennkammer, in der nach Zündung und Verbrennen des Treibstoffs ein Heißgas erzeugt wird, mit einer eine Flüssigkeit enthaltenen Flüssigkeitskammer und mit einer Mischkammer, in der Flüssigkeit und Heißgas gemischt werden.

Solche Gasgeneratoren sind bekannt. So offenbart die US 5,487,561 einen Flüssigkeitsgenerator, der zur Kühlung des erzeugten Heißgases eine Flüssigkeit einsetzt, die in einer die Brennkammer ringförmig umgebenden Kammer gespeichert ist. Wird nun der Zündkreis des Gasgenerators geschlossen, wird eine Luftkammer erhöhtem Druck ausgesetzt. Dies führt dazu, daß ein in ihr beweglich gelagertes Trennelement, was den flüssigen Treibstoff von der Luft in der Kammer trennt, verschoben wird. Durch den erhöhten Druck werden in dem Trennelement vorgesehene Öffnungen, die ansonsten dicht sind, frei, und der Treibstoff kann in der Luftkammer exotherm reagieren. Das erzeugte Heißgas kann dann durch die in dieser Kammer enthaltenen Öffnungen in eine Kühlkammer strömen und durch Flüssigkeitsverdunstung abgekühlt werden.

Die Kühlung des Heißgases ist deshalb erforderlich, weil das zu füllende Sicherheitssystem, insbesondere der Gassack, in Kontakt mit Fahrzeuginsassen gelangen kann. Um diese vor Verbrennungen zu schützen, muß die Temperatur auf ein verträgliches Maß abgekühlt werden.

Die US 5,060,973 offenbart einen Gasgenerator, der eine Speicherkammer, in der flüssiger Treibstoff gespeichert ist und eine Reaktionskammer aufweist, in der Heißgas erzeugt wird und durch vorgesehene Öffnungen den Gassack füllt. Dieser Generator verfügt allerdings über keinerlei Kühlungsmöglichkeiten.

Die US-A-3 692 495 zeigt einen Gargenerator mit den Merkmalen des Oberbegriffs des Anspruchs 1.

Bei den bislang bekannten Gasgeneratoren erfolgt die Flüssigkeitseinspritzung unkontrolliert und nicht steuerbar, denn es wird stets die gesamte Flüssigkeit eingespritzt.

Als nachteilig und gefährlich wirkt es sich bei den bekannten Systemen ferner aus, wenn etwa dem Heißgas zu viel Flüssigkeit beigemischt wird. Durch die spezifische Viskosität, die Oberflächenspannung und die höhere Trägheit der Flüssigkeit gegenüber den gasförmigen Elementen des Gasgenerators können die Flüssigkeitströpfchen nicht so schnell wie das Gas beschleunigt werden. Das kann im schlimmsten Fall zu einer Verblockung, d.h. einer Verstopfung der Öffnungen des Systems führen.

Eine optimale Füllung des Gassacks ist nur dann möglich, wenn ein perfekt temperiertes Gasgemisch in einer minimalen Zeitspanne im Millisekundenbereich in den Gassack strömt.

Zur Vermeidung dieser Nachteile stellt die vorliegende Erfindung einen Gasgenerator der eingangs genannten Art zur Verfügung, der dadurch gekennzeichnet ist, daß er mindestens eine Steuervorrichtung aufweist, die das Mischungsverhältnis von Flüssigkeit und Heißgas in der Mischkammer steuert, so daß nicht, wie beim Stand der Technik zwangsläufig die gesamte Flüssigkeitsmenge eingespritzt wird.

Die Steuervorrichtung ist für den Ablauf und die Ausgestaltung des Einspritzprozesses verantwortlich. Sie kann durch ein oder mehrere Steuerventile ausgebildet sein, das/die über ein Gasleitrohr mit dem Heißgas und der in der Flüssigkeitskammer enthaltenen Flüssigkeit in Eingriff steht/stehen.

Die Erfindung schafft ferner eine schnelle Steuerung der eingespritzten Flüssigkeitsmenge, die durch mindestens ein Steuerventil erreicht wird, durch das die Flüssigkeit strömt und das die in die Mischkammer einströmende Flüssigkeitsmenge steuert. Der erfindungsgemäße Gasgenerator steuert in dieser Ausführungsform die dem Heißgas zugeführte Flüssigkeitsmenge und damit auch das Mischungsverhältnis von Heißgas zu eingespritzter Flüssigkeit. Diese Steuerung erfolgt unmittelbar, d.h. es wird nicht etwa indirekt über die Zufuhr eines Druckgases, das wiederum ein Trennelement verschiebt, die eingespritzte Flüssigkeitsmenge gesteuert, sondern das Ventil wirkt direkt auf die Flüssigkeit. Dies hat zahlreiche Vorteile:

Das Ventil ist einem kalten Flüssigkeitsstrom und nicht etwa einem heißen Gasstrom ausgesetzt. Da im Heißgasstrom auch Verunreinigungen mitgeführt werden, besteht die Gefahr der Blockierung des Ventils. Dies kann aber nicht mehr der Fall sein. wenn die Flüssigkeit durch das Ventil strömt. Auch ein Beschädigen des Ventils durch den Heißgasstrom oder die mitgeführten Verunreinigungen ist ausgeschlossen. Schließlich muß bei einem Ventil, welches das unter Druck stehende Heißgas zur Betätigung eines verschiebbaren Trennelements steuert, das Ventil sowohl als Belüftungs- als auch Entlüftungsventil ausgeführt sein. Denn um den Einspritzvorgang des flüssigen Treibstoffs zu unterbrechen, muß schlagartig der Druck hinter dem Trennelement auf das Niveau des Drucks in der Mischkammer abgebaut werden. Ein Belüftungs- und Entlüftungsventil benötigt jedoch einen großen Bauraum, da es eine große Querschnittsfläche besitzen muß, um kurze Schaltzeiten zu erreichen.

Vorzugsweise ist das erfindungsgemäße Steuerventil an einem Auslaß der Flüssigkeitskammer angeordnet.

In einer weiteren Ausführungsform der Erfindung ist in der Flüssigkeitskammer ein Auspreßkolben angeordnet, der in der Kammer enthaltene Flüssigkeit von dem ebenfalls enthaltenen Gas trennt und der von der Steuervorrichtung angesteuert wird.

Vorteilhafterweise umfaßt die Steuervorrichtung eine externe Steuermöglichkeit, also eine, die unabhängig von aktuellen Verbrennungsverhältnissen, wie dem erzeugten Druck des Heißgases, arbeitet. Dies wird erfindungsgemäß durch einen Hubmagneten erreicht, der geeignet angesteuert werden kann, so daß - je nach Bedarf - mehr oder weniger Flüssigkeit eingespritzt wird. Alternativ dazu sind auch andere Steuerelemente möglich, wie ein Piezokristall oder ein Drehantrieb mit Gewindespindel.

Soll die Einspritzmengensteuerung ausschließlich aufgrund der pyrotechnischen Druckverhältnisse erfolgen, so wird die Steuervorrichtung in der Ausgestaltung eines Ventils abhängig vom Gasdruck vor der Ventilnadel getriggert. Proportional zum Öffnungszustand des Ventils ist der sich auf der dem Ventil benachbarten Seite des Auspreßkolbens einstellende Gasdruck und damit die Menge der eingespritzten Flüssigkeit. Dies erscheint dann sinnvoll, wenn etwa die Menge des Brennstoffs in der Brennstoff-Kammer und damit auch die Menge an generiertem Heißgas variiert, so daß bei verringerter Heißgasmenge auch weniger Flüssigkeit eingespritzt zu werden braucht und vice versa.

In der bevorzugten Ausführungsform der Erfindung weist die Steuervorrichtung allerdings eine Kombination der in den letzten beiden Absätzen dargestellten Möglichkeiten auf, so daß die Steuerung sowohl aufgrund der erzeugten Druckverhältnisse als auch extern erfolgt.

Eine bevorzugte Ausführungsform der Erfindung besteht darin, daß die Steuervorrichtung die in die Mischkammer einströmende Flüssigkeitsmenge regelt. Dabei umfaßt die Steuervorrichtung zusätzlich einen oder mehrere Druckaufnehmer, die den Druck des erzeugten Heißgases erfassen und an eine, bevorzugterweise mikroelektronische Steuer- oder sogar Regeleinheit weiterleiten, die ihrerseits dann den Hub des Auspreßkolbens regelt.

Bei einer bevorzugten Ausführungsform ist stromabwärts der Flüssigkeitskammer ein Flüssigkeitsleitrohr angeordnet, in dessen Innerem die Flüssigkeit von der Flüssigkeitskammer zur Mischkammer geleitet wird. Das Steuerventil sitzt vorzugsweise zwischen Flüssigkeitskammer und Flüssigkeitsleitrohr, kann jedoch auch am Ende des Flüssigkeitsleitrohres angeordnet sein.

Eine einfache Konstruktion des Ventils wird dadurch erreicht, daß das Flüssigkeitsleitrohr Durchströmöffnungen hat, die durch Verschieben eines Schiebers, der Teil des Steuerventils ist, mehr oder weniger weit geöffnet werden können. Der Schieber sitzt dabei auf dem Flüssigkeitsleitrohr.

Damit die Spule, die den Schieber betätigen muß, möglichst nahe am Schieber selbst ist, besitzt dieser ein auf dem Flüssigkeitsrohr sitzendes rohrförmiges Teil und ein radial dazu äußeres rohrförmiges Teil. Dieses letztgenannte rohrförmige Teil grenzt an die Spule an. Rippen verbinden die rohrförmigen Teile und erlauben ein Einströmen der Flüssigkeit in den Hohlraum zwischen den beiden rohrförmigen Teilen.

Es gibt unterschiedlichste Rückhaltesysteme für Fahrzeuginsassen. Sie unterscheiden sich nicht zuletzt nach ihrem Einbauort im Fahrzeug, der Art des verwendeten pyrotechnischen Treibmittels und dem angewandten Befüllungskonzept. Abhängig von diesen Parametern muß bei einem optimal ausgelegten System auch der Vermischungprozeß gesteuert werden, etwa hinsichtlich Menge der einzuspritzenden Flüssigkeit und hinsichtlich des Zeitverlaufs des Einspritzvorganges. Das wird durch die Erfindung möglich.

Weitere Vorteile und Merkmale der Erfindung ergeben sich aus der folgenden Figurenbeschreibung bevorzugter Ausführungsformen unter Bezugnahme auf die Zeichnungen. In diesen zeigt:
Figur 1 eine Schnittdarstellung eines erfindungsgemäßen Gasgenerators,
Figur 2 eine vergrößerte Schnittansicht nur des rechten Endes des in Figur 1 gezeigten Gasgenerators, der in diesem Bereich modifiziert ist,
Figur 3 eine Längsschnittansicht durch eine andere Ausführungsform des erfindungsgemäßen Gasgenerators,
Figur 4 einen Schnitt längs der Linie III-III in Figur 3, der das Ventil näher zeigt,
Figur 5 eine Perspektivansicht des in Figur 3 bereits gezeigten Flüssigkeitsleitrohres, und
Figur 6 eine Perspektivansicht durch den auf dem Flüssigkeitsleitrohr nach Figur 3 sitzenden Schieber.

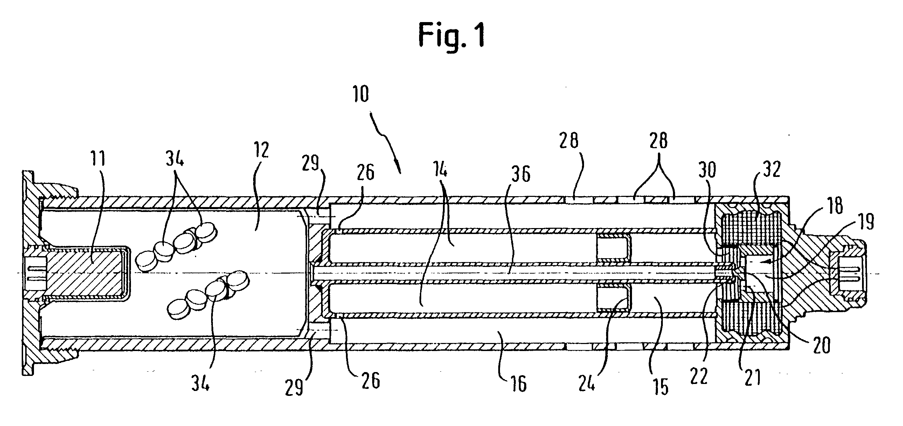

Der allgemein mit 10 bezeichnete Rohrgasgenerator ist in Figur 1 dargestellt. Er ist in dieser Ausführungsform als Flüssiggasgenerator ausgebildet mit einer im wesentlichen zylindrischen Form. Dabei umfaßt er vier Kammern, eine Brennkammer 12, eine Flüssigkeitskammer 14, eine Druckkammer 15 und eine Mischkammer 16.

Die Brennkammer 12 enthält neben dem pyrotechnischen Festtreibstoff 34 eine Anzündeinheit 11. Nach der Zündung des Festtreibstoffs 34 wird Heißgas erzeugt.

Der Gasgenerator 10 weist weiterhin ein zentrales Gasleitrohr 36 auf, das zur Führung eines Teiles des Heißgasstromes nach Zündung bestimmt ist. Das Gasleitrohr 36 mündet in eine Steuervorrichtung, die in dieser Ausgestaltung der Erfindung als Steuerventil 18 ausgebildet ist. Dieses hat eine Ventilnadel 20 und einen Ventilsitz 22, eine Feder 30 und einen Hubmagneten 32.

Die Flüssigkeitskammer 14 ist im wesentlichen von zylindrischer Gestalt und umschließt das Gasleitrohr 36. Die in der Flüssigkeitskammer 14 enthaltene Flüssigkeit wird von dem in die Druckkammer 15 gelangenden Heißgas durch einen Auspreßkolben 24 getrennt. Der Auspreßkolben 24 umfaßt vorzugsweise eine Abdichtung, die den Stoffaustausch zwischen Flüssigkeit in der Flüssigkeitskammer 14 und Heißgas in der Druckkammer 15 unmöglich machen soll. Die in der Flüssigkeitskammer 14 enthaltene Flüssigkeit kann neben einem reinen Kühlmittel auch eine brennbare Flüssigkeit sein.

Die Flüssigkeitskammer 14 wird von der Mischkammer 16 umgeben und ist mit ihr über Öffnungen 26 verbunden. Die Öffnungen 26 sind in der bevorzugten Ausführungsform nahe der Einströmöffnung 29 für Heißgas zwischen Brennkammer 12 und Mischkammer 16 angeordnet, damit ein maximaler Vermischungsgrad zwischen dem zu mischenden Heißgas und der Flüssigkeit erreicht werden kann. Radiale Auslaßöffnungen 28 zwischen der Mischkammer 16 und dem Gassack sind aus dem gleichen Grund möglichst weit entfernt von den Öffnungen 26, 29, genauer an dem den Öffnungen 26, 29 gegenüberliegenden axialen Ende der Mischkammer angeordnet.

Aus Figur 1 ergibt sich ferner die Wirkungsweise des Gasgenerators 10, wobei sie den Zustand des Systems festhält, bei dem der Auspreßkolben 24 bereits ein Stück verfahren ist.

Das erzeugte Heißgas strömt teilweise nach Zündung des Gasgenerators 10 aus der Brennkammer 12 über das Gasleitrohr 36 und teilweise über Einströmöffnungen 29 in die Mischkammer 16. Das Gasleitrohr 36 mündet in die Steuervorrichtung, die als Steuerventil 18 in Form eines Nadelventils ausgebildet ist. In einer alternativen Ausführung ist das Ventil als Schieberventil ausgebildet.

Die Grundstellung des Ventils 18 wird durch die Vorspannung der Feder 30 bestimmt. Diese stützt sich auf ihrer innenliegenden, zentrumsnahen Seite gegen eine Wand ab und hält das Ventil 18 in geöffnetem Zustand. Strömt nun Heißgas durch das Gasleitrohr 36 und auf die Ventilnadel 20, die topfförmig ist und einen einen Teil der Druckkammer 15 bildenden Ventilraum 19 begrenzt, so wird es als Druckgas in den Ventilraum 19 und über rückwärtige Öffnungen 21 in der Ventilnadel 20 in die Druckkammer 15 gelangen und den Auspreßkolben 24 antreiben. Zusätzlich wird der Hub des Auspreßkolbens 24 durch den Ansteuerstrom für den Elektro-Hubmagneten 32 gesteuert. Der wirkt so auf die Ventilnadel 20, daß diese sich dem Ventilsitz 22 nähert und das Ventil 18 geschlossen wird (gezeigte Stellung). Durch geeignetes Ansteuern des Hubmagneten 32 kann also je nach aktuellem Bedarf mehr oder weniger Flüssigkeit in das stromaufwärtige Ende der Mischkammer über die Öffnungen 26, die bis zu einem bestimmten Druck durch eine Folie geschlossen sind, eingespritzt werden. Ein anderer Teil des Heißgascs gelangt über die Öffnungen 29 in die Mischkammer und vermischt sich dort mit der nahe der Öffnung 29 eingespritzen Flüssigkeit auf dem Weg zu den Auslaßöffnungen 28.

Die Ansteuerung des Hubmagneten 32 kann erfindungsgemäß so erfolgen, daß der Hub des Auspreßkolbens 24 abhängig oder unabhängig vom Gasdruck des Heißgases ist.

Soll er davon abhängig sein, so wird der Magnet 32 nicht - oder nur den Gasdruck unterstützend - betätigt, und somit ist der Hub des Kolbens 24 proportional zum anliegenden Gasdruck. Wird viel Heißgas erzeugt, ist der Druck groß, das Ventil 18 weit geöffnet, und der Auspreßkolben 24 erzeugt seinerseits einen erhöhten Auspreßdruck auf die Flüssigkeit, so daß viel Flüssigkeit dem Heißgas zugeführt wird. Vice versa wird bei geringerem Heißgasdruck auch weniger Flüssigkeit eingespritzt.

Soll die Steuerung der Flüssigkeitseinspritzung nun unabhängig vom Heißgasdruck erfolgen, so kann durch Aktivierung des Hubmagneten 32 die heißgasgesteuerte Wirkung des Steuerventils 18 sogar aufgehoben werden. D. h., daß auch bei beispielsweise hohem Gasdruck das Ventil 18 nahezu geschlossen ist und erst sukzessive geöffnet wird (während etwa der Gasdruck schon sinken kann), so daß eine den Druckverhältnissen nahezu gegenläufige Steuerung erlangt wird. Mit dieser Ausführungsform besteht die Möglichkeit, die Steuerung der Flüssigkeitseinspritzung von dem Druck des Heißgases zu entkoppeln. Die Parameter, aufgrund derer die Steuervorrichtung dann gesteuert wird, können beispielsweise in der Größe des zu füllenden Gassacks, in der Anwendung oder dem Einbauort des Gasgenerators oder in der Art des pyrotechnischen Befüllungskonzeptes liegen. Diese Funktionalität der Erfindung tritt insbesondere dann in den Vordergrund, wenn eine spezielle Faltung des Gassacks es notwendig macht, Mischgas aus der Mischkammer 16 erst sukzessive ansteigend in den Gassack einströmen zu lassen, um im Endeffekt eine schnellstmögliche Entfaltung zu erzielen.

Besonders vorteilhaft erweist es sich bei der erfindungsgemäßen Lösung, daß der Gasgenerator 10 nicht notwendigerweise immer die gesamte Menge an Flüssigkeit einspritzen muß, wie es bei den bislang bekannten Systemen der Fall ist. Dadurch wird die Flexibilität des Systems enorm gesteigert und eine modulartige Verwendung von Gasgenerator-Einheiten für verschiedene Einsätze möglich.

Um die Steuermöglichkeiten weiterhin zu erhöhen, ist es denkbar, ein oder mehrere Steuerventile 18 zusätzlich im Bereich zwischen der Brennkammer 12 und der Mischkammer 16 anzuordnen, daß die Menge der eingespritzten Flüssigkeit und die Menge des zugeführten Heißgases gesteuert wird.

In anderen Ausgestaltungen der Erfindung können auch mehrere Steuerventile 18 zu einer Steuervorrichtung zusammengefaßt sein, die an unterschiedlichen Stellen innerhalb des Gasgenerators 10 angeordnet sein können.

In einer weiterentwickelten Ausführung der Erfindung ist die Steuervorrichtung so ausgebildet, daß sie mit weiteren Bestandteilen des Gasgenerators 10, wie mindestens einem Druckaufnehmer einen Regelkreislauf darstellt, das heißt, daß die Steuervorrichtung das Mischungsverhältnis zwischen Flüssigkeit und Heißgas regelt.

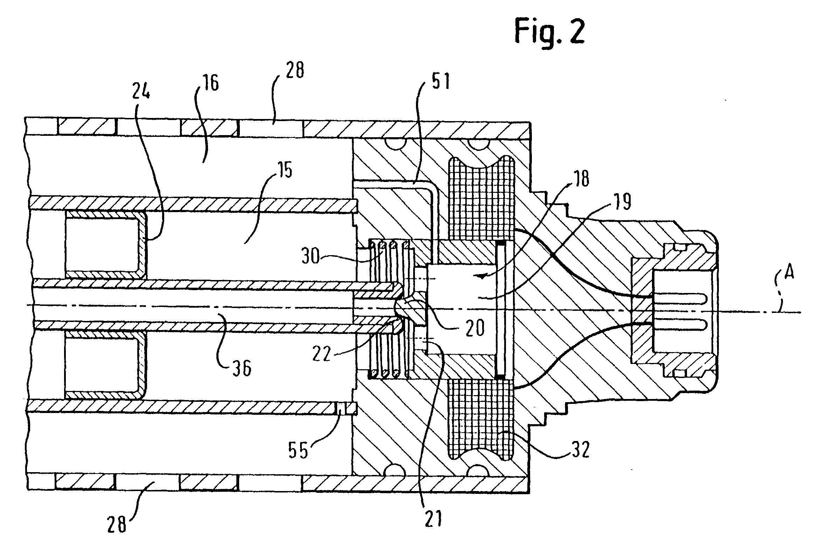

Die Zufuhr von Flüssigkeit in die Mischkammer kann während des Ausströmens von Heißgas auch gestoppt werden. Hierzu wird die Steuervorrichtung 18 entsprechend betätigt, und die Ventilnadel 20 drückt auf den Ventilsitz, wie es in Figur 2 gezeigt ist. Aufgrund der mit dem Einströmen von Heißgas in die Druckkammer verbundenen Ausdehnung der Wände der Druckkammer und der Kompression des Heißgases in der Druckkammer 15, zu der auch die Ventilkammer 19 gehört, kann es jedoch vorkommen, daß trotz geschlossenem Ventil noch ein weiteres und unerwünschtes Verschieben des Auspreßkolbens 24 erfolgt. Um dies zu verhindern, sind die in Figur 2 gezeigten und im folgenden noch näher erläuterten Vorkehrungen getroffen. Die obere Hälfte, oberhalb der Mittelachse A, zeigt eine erste Ausführungsform und die untere Hälfte eine zweite Ausführungsform.

Bei der oberen Ausführungsform erstreckt sich ein Ablaßkanal 51 von der Ventilkammer 19 zur Mischkammer 16. Die topfförmige Ventilnadel 20 hat in ihrer mantelseitigen Wand eine Öffnung, die den Ablaßkanal 51 mit definiert. In der in Figur 2 gezeigten geschlossenen Stellung des Ventils fluchtet der im Ventil vorhandene Abschnitt des Auslaßkanals mit dem in der Stirnwand vorgesehenen Abschnitt des Auslaßkanals. Damit steht die Mischkammer 16 mit dem Ventilraum 19 und damit auch mit dem Teil der Druckkammer 15, der links von der Ventilnadel 20 liegt, in Strömungsverbindung.

Soll die Zufuhr von Flüssigkeit gestoppt werden, so schließt das Ventil, und der noch vorhandene Überdruck in der Druckkammer 15 samt des Ventilraums 19 wird sich schnell abbauen. Somit stoppt die Bewegung des Auspreßkolbens 24 unmittelbar nach Schließen des Ventils 18.

Die untere Hälfte der Figur 2 unterscheidet sich von der Ausführungsform nach der oberen Hälfte dahingehend, daß der Ablaßkanal 55 von dem Teil der Druckkammer 15 ausgeht, der nicht den Ventilraum 19 bildet. Der Ablaßkanal 55 ist lediglich eine kleine Öffnung in der die Druckkammer 15 von der Mischkammer begrenzende Umfangswandung. Über diesen, nicht verschließbaren Ablaßkanal 55 kann sich der Druck in der Druckkammer 15 nach Schließen des Ventils 18 schnell abbauen. Der Querschnitt des Ablaßkanals 55 ist jedoch so klein gewählt, daß er die Leistung des Heißgases beim gewollten Verschieben des Auspreßkolbens 24 kaum beeinflußt.

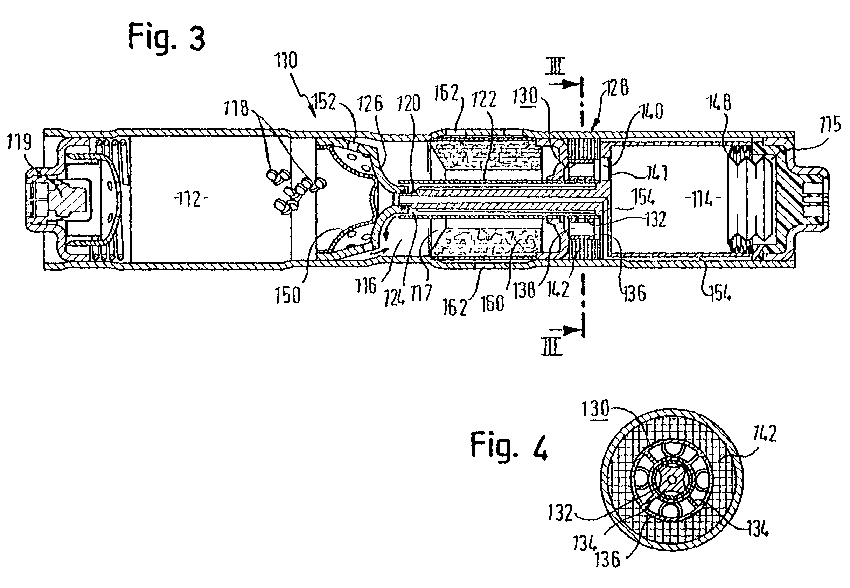

Der in Figur 3 gezeigte Rohrgasgenerator 10 weist eine Brennkammer 112, eine Flüssigkeitskammer 114, eine Druckkammer 115 sowie eine Mischkammer 116 auf. Mit 117 ist eine Filterkammer dargestellt.

Die Brennkammer 112 enthält neben dem pyrotechnischen Treibstoff 118 eine Anzündeinheit 119.

Der Gasgenerator weist darüber hinaus ein zentrales Gasleitrohr 120 auf, das einen Teil des Heißgasstromes nach Zündung zur Druckkammer 115 leitet. Das Gasleitrohr 120 ist von einem Flüssigkeitsleitrohr 122 umgeben, so daß zwischen Gasleitrohr 120 und Flüssigkeitsleitrohr 122 ein ringförmiger Kanal 124 gebildet ist, der sich bis zur Mischkammer 116 erstreckt und dort an einer konusförmigen Stirnwand 126 endet. Am stromaufwärtigen Ende des Flüssigkeitsleitrohres 122 sitzt ein Steuerventil 128, das als Magnetventil ausgebildet ist. Das Steuerventil 128 umfaßt einen Schieber 130, der in den Figuren 2 und 4 deutlicher zu erkennen ist. Der Schieber 130 hat ein auf dem Flüssigkeitsleitrohr 122 sitzendes rohrförmiges Teil 132 und ein über zahlreiche Rippen 134 damit verbundenes und koaxial zum rohrfömigen Teil 132 angeordnetes äußeres rohrfömiges Teil 136. Zwischen den rohrförmigen Teilen 132 und 136 ergibt sich ein Hohlraum 138. In diesen Hohlraum kann Flüssigkeit über Öffnungen 140 aus der Flüssigkeitskammer 114 einströmen. Die Flüssigkeitskammer 114 ist gegenüber der Öffnung 140 in noch nicht betätigtem Zustand geschlossen, indem eine Membrane 141 vor der Öffnung 140 angeordnet ist. Das Steuerventil 128 hat eine Spule 142, welche das radial äußere rohrförmige Teil 136 umgibt.

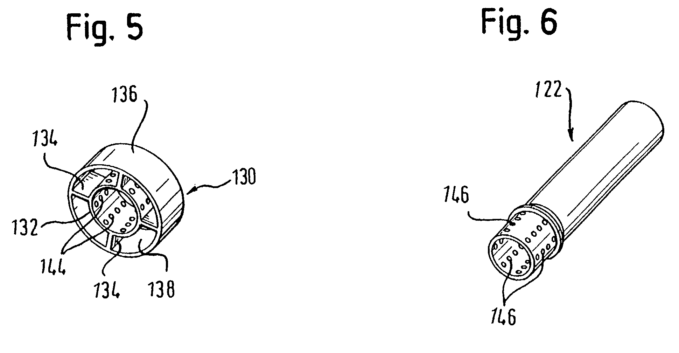

Die Spule 142 kann den Schieber 130 axial bewegen. Üblicherweise ist eine nicht gezeigte Feder vorhanden, die den Schieber 130 bei stromloser Spule in eine definierte Ausgangsstellung bringt. Zahlreiche radiale Durchströmöffnungen 144 im Teil 132 können in einer entsprechenden axialen Stellung des Schiebers 130 mit radialen Öffnungen im Flüssigkeitsleitrohr 122 fluchten oder vom Schieber 130 verdeckt werden. Die Öffnungen im Flüssigkeitsleitrohr 122 sind in Figur 5 besser zu erkennen und sind mit dem Bezugszeichen 146 gekennzeichnet.

In Figur 3 ist zur besseren Darstellung exemplarisch nur eine Öffnung im Flüssigkeitsleitrohr und eine im Schieber dargestellt.

Die Flüssigkeitskammer ist von der Druckkammer durch einen Balg 148 getrennt. Der Balg 148 bildet einen Auspreßkolben.

Beim Zünden des pyrotechnischen Festtreibstoffes 118 entsteht heißes Gas. Dieses Gas zerstört zuerst ein Sieb 150 und gelangt dann zum Teil über Öffnungen 152 in die Mischkammer. Ein anderer Teil des Heißgases gelangt jedoch über das zentral angeordnete Gasleitrohr 120 und einen anschließenden Kanal 154 in die Druckkammer 115. Der sich hier aufbauende Druck führt zur axialen Verschiebung des Balgs 148 nach links. Dadurch wird Flüssigkeit über die Öffnungen 140 in den Hohlraum 138 gepreßt. Über einen Ansteuerstrom wird die Stellung des Schiebers 130 gesteuert. Die Öffnungen 144 und 146 kommen mehr oder weniger miteinander zur Deckung, so daß mehr oder weniger Flüssigkeit über den Kanal 124 in die Mischkammer 116 gelangt.

Das Steuerventil 128 steuert die Menge der eingespritzten Flüssigkeit und damit das Mischungsverhältnis Heißgas zu Flüssigkeit.

Die in die Mischkammer einströmende Flüssigkeit strömt an der konischen Stirnwand 126 in Pfeilrichtung nach außen. Der sich ergebende Flüssigkeitsfilm wird mit zunehmendem Strömungsweg immer dünner und reißt an einer Kante ab, wo er auch auf den Heißgasstrom trifft, der durch die Öffnungen 152 in die Mischkammer gelangt. Das Gas verdampft die Flüssigkeit. Das Gemisch strömt schräg radial einwärts in die Filterkammer und gelangt da über Filter 160 zu radialen Auslaßöffnungen 162, von wo aus es zum Beispiel in einen Gassack strömt. Die Flüssigkeit kann brennbar oder nicht brennbar sein.

Indem die in den Kanal 124 gelangende Flüssigkeitsmenge am Ausgang der Flüssigkeitskammer 114 gesteuert wird, kann der Flüssigkeitsstrom auch unmittelbar, d.h. ohne Verzögerung gestoppt werden. Ein Verstopfen des Steuerventils 128 ist so gut wie ausgeschlossen, da durch es nur die Flüssigkeit strömt, die frei von Verunreinigungen oder Fremdkörpern ist. Die Steuerung des Ventils 128 ist sehr einfach, das Ventil kann beispielsweise so ausgelegt werden, daß die Menge der eingespritzten Flüssigkeit proportional zum durch die Magnetspule durchgeleiteten Strom ist.

Das Ventil 128 kann zeitlich vor und/oder während des Aktivierens des Gasgenerators angesteuert und betätigt werden. Zum Beispiel ist es möglich, das Ventil vor Aktivieren des Gasgenerators vollständig oder teilweise zu öffnen, um damit die notwendige Flüssigkeitsmenge beim Aktivieren des Gasgenerators zur Verfügung zu stellen. Diese Menge hängt vor allem von dem Rückhaltesystem ab, das vom Gasgenerator mit Gas versorgt wird. Die Ventilstellung und damit die Durchströmöffnungen können aber auch während des Aktivieren des Gasgenerators verändert werden.

Soll die sogenannte Ventilhaltezeit, also die Zeit, bei der das Ventil eine bestimmte Stellung einnimmt, verkürzt werden, so ist auch ein sogenanntes Pulsen des Ventils möglich. Dies bedeutet, daß das Ventil in extrem kurzen Zeitabständen mehrfach geöffnet und wieder geschlossen wird, während Heißgas erzeugt wird. Durch das pulsende Ventil kann die gleiche Flüssigkeitsmenge in die Mischkammer eingeleitet werden, die auch bei einem teilweise geöffneten Ventil in die Mischkammer gelangt. Bei einem pulsenden Ventil ist jedoch das Abdichten der Teile des Ventils verbessert und vereinfacht, da kürzere Ventilhaltezeiten vorhanden sind.

## Patentansprüche

1. Gasgenerator (10) für ein Sicherheitssystem, insbesondere für ein Fahrzeuginsassen-Rückhaltesystem, mit einer treibstoffgefüllten Brennkammer (12; 112), in der nach Zündung und Verbrennen des Treibstoffs (118) ein Heißgas erzeugt wird, mit einer eine Flüssigkeit enthaltenden Flüssigkeitskammer (14; 114) und mit einer Mischkammer (16; 116), in der Flüssigkeit und Heißgas gemischt werden, **dadurch gekennzeichnet, daß** der Gasgenerator (10) mindestens eine Steuervorrichtung aufweist, die das Mischungsverhältnis von Flüssigkeit und Heißgas in der Mischkammer (16; 116) steuert.

2. Gasgenerator nach Anspruch 1, **dadurch gekennzeichnet, daß** die Steuervorrichtung durch mindestens ein Steuerventil (18) gebildet ist.

3. Gasgenerator nach einem der Ansprüche 1 oder 2, **dadurch gekennzeichnet, daß** die Steuervorrichtung die in die Mischkammer (16; 116) einströmende Flüssigkeitsmenge steuert.

4. Gasgenerator nach Anspruch 2 und 3, **dadurch gekennzeichnet, daß** die Flüssigkeit durch das Steuerventil (128) strömt.

5. Gasgenerator nach Anspruch 4, **dadurch gekennzeichnet, daß** das Steuerventil (128) an einem Auslaß der Flüssigkeitskammer (114) angeordnet ist.

6. Gasgenerator nach einen der vorstehenden Ansprüche, **dadurch gekennzeichnet, daß** eine Druckkammer (15; 115) vorgesehen ist, die durch einen Auspreßkolben (24; 148) von der Flüssigkeitskammer (14; 114) getrennt ist.

7. Gasgenerator nach Anspruch 6, **dadurch gekennzeichnet, daß** die Steuervorrichtung so ausgebildet ist, daß sie das Mischungsverhältnis unabhängig von der Stellung des Auspreßkolbens (24; 148) steuert.

8. Gasgenerator nach einem der Ansprüche 6 und 7, **dadurch gekennzeichnet, daß** zur Verschiebung des Auspreßkolbens (24) Druckgas in die Druckkammer (15; 115) eingeleitet wird.

9. Gasgenerator nach Anspruch 8, **dadurch gekennzeichnet, daß** die Steuervorrichtung den Druck in der Druckkammer (15; 115) steuert.

10. Gasgenerator nach Anspruch 8 oder 9, **dadurch gekennzeichnet, daß** mindestens ein Teil des Heißgases das Druckgas bildet und dieser Teil über wenigstens eine Leitung in die Druckkammer (15; 115) gelangt.

11. Gasgenerator nach Anspruch 10, **dadurch gekennzeichnet, daß** die Steuervorrichtung die in die Druckkammer (15) einströmende Druckgasmenge steuert.

12. Gasgenerator nach einem der Ansprüche 10 und 11, **dadurch gekennzeichnet, daß** die Leitung durch ein zentrales Gasleitrohr (36) gebildet ist, durch das mindestens ein Teil des Heißgases aus der Brennkammer (12) nach Zündung zu der Steuervorrichtung strömt.

13. Gasgenerator nach einem der Ansprüche 6 bis 12, **dadurch gekennzeichnet, daß** ein von der Druckkammer (15) ausgehender Ablaßkanal (51; 55) vorgesehen ist, über den in die Druckkammer (15) eingeleitetes Heißgas nach Stoppen der Zufuhr von weiterem Heißgas in eine Umgebung mit niedrigerem Druck ausströmen kann.

14. Gasgenerator nach Anspruch 13, **dadurch gekennzeichnet, daß** die Steuervorrichtung (18) die in die Druckkammer (15) einströmende Heißgasmenge steuert, daß die Steuervorrichtung (18) auch den Ablaßkanal (51) öffnet und schließt und daß bei Sperren der Zufuhr des Heißgases in die Druckkammer (15) auch der Ablaßkanal (51) geschlossen ist.

15. Gasgenerator nach einem der vorhergehenden Ansprüche, **dadurch gekennzeichnet, daß** zwischen der Flüssigkeitskammer (14) und der Mischkammer (16), im Bereich von in die Mischkammer (16) mündenden Einströmöffnungen (29) für Heißgas mindestens eine Öffnung (26) vorgesehen ist.

16. Gasgenerator nach Anspruch 15, **dadurch gekennzeichnet, daß** die Mischkammer (16) mindestens eine Auslaßöffnung (28) aufweist, die den Innenraum der Mischkammer (16) mit demjenigen des zu füllenden Rückhaltesystems verbindet, daß die Mischkammer eine langgestreckte Ringkammer ist, welche die Flüssigkeitskammer (14) umgibt, und daß die Auslaßöffnung (28) im Bereich des der Öffnung (26) zwischen Mischkammer (16) und Flüssigkeitskammer (14) entgegengesetzten axialen Endes der Ringkammer angeordnet ist.

17. Gasgenerator nach einem der Ansprüche 1 bis 15, **dadurch gekennzeichnet, daß** die Steuervorrichtung (28; 128) mindestens ein Magnetventil ist und eine Feder (30) und einen Hubmagneten (32) umfaßt.

18. Gasgenerator nach einem der Ansprüche 1 bis 17, **dadurch gekennzeichnet, daß** die Flüssigkeit ein Kühlmittel ist.

19. Gasgenerator nach einem der Ansprüche 1 bis 18, **dadurch gekennzeichnet, daß** die Flüssigkeit eine brennbare Flüssigkeit ist.

20. Gasgenerator nach einem der vorhergehenden Ansprüche, **dadurch gekennzeichnet, daß** stromabwärts der Flüssigkeitskammer (114) ein Flüssigkeitsleitrohr (122) angeordnet ist, in dessen Innerem die Flüssigkeit von der Flüssigkeitskammer (114) zur Mischkammer (116) geleitet wird, und daß das Steuerventil (128) zwischen Flüssigkeitsleitrohr (122) und Flüssigkeitskammer (114) sitzt.

21. Gasgenerator nach Anspruch 20, **dadurch gekennzeichnet, daß** das Steuerventil einen beweglichen Schieber (130) aufweist, der auf dem Flüssigkeitsleitrohr (122) sitzt.

22. Gasgenerator nach Anspruch 21, **dadurch gekennzeichnet, daß** das Flüssigkeitsleitrohr (122) Durchströmöffnungen (146) hat, die durch Verstellen des Schiebers (130) mehr oder weniger weit geöffnet werden können.

23. Gasgenerator nach Anspruch 21 oder 22, **dadurch gekennzeichnet, daß** der Schieber (130) ein auf dem Flüssigkeitsleitrohr (122) sitzendes rohrförmiges Teil (132) und ein radial dazu äußeres rohrförmiges Teil (136) hat, welches an eine Spule (142) angrenzt, wobei die beiden rohrförmigen Teile (132, 136) durch Rippen (134) miteinander verbunden sind.

## Claims

1. A gas generator (10) for a safety system, in particular for a vehicle occupant restraint system, with a combustion chamber (12; 112) filled with propellant, in which a hot gas is generated after ignition and burning of the propellant (118), with a fluid chamber (14; 114) containing a fluid, and with a mixing chamber (16; 116) in which fluid and hot gas are mixed, **characterized in that** the gas generator (10) has at least one control device which controls the mixture ratio of fluid and hot gas in the mixing chamber (16; 116).

2. The gas generator according to claim 1, **characterized in that** the control device is formed by at least one control valve (18).

3. The gas generator according to any of claims 1 or 2, **characterized in that** the control device controls the quantity of fluid flowing into the mixing chamber (16; 116).

4. The gas generator according to claim 2 and 3, **characterized in that** the fluid flows through the control valve (128).

5. The gas generator according to claim 4, **characterized in that** the control valve (128) is arranged on an outlet of the fluid chamber (114).

6. The gas generator according to any of the preceding claims, **characterized in that** a pressure chamber (15; 115) is provided, which is separated from the fluid chamber (14; 114) by an ejection piston (24; 148).

7. The gas generator according to claim 6, **characterized in that** the control device is constructed in such a way that it controls the mixture ratio independently of the position of the ejection piston (24; 148).

8. The gas generator according to any of claims 6 and 7, **characterized in that** compressed gas is introduced into the pressure chamber (15; 115) for displacing the ejection piston (24).

9. The gas generator according to claim 8, **characterized in that** the control device controls the pressure in the pressure chamber (15; 115).

10. The gas generator according to claim 8 or 9, **characterized in that** at least a portion of the hot gas forms the compressed gas and this portion reaches the pressure chamber (15; 115) via at least one conduit.

11. The gas generator according to claim 10, **characterized in that** the control device controls the quantity of compressed gas flowing into the pressure chamber (15).

12. The gas generator according to any of claims 10 and 11, **characterized in that** the conduit is constituted by a central gas guiding pipe (36) through which after ignition at least a portion of the hot gas flows out of the combustion chamber (12) to the control device.

13. The gas generator according to any of claims 6 to 12, **characterized in that** a discharge channel (51; 55) is provided which extends from the pressure chamber (15) and via which hot gas that is introduced into the pressure chamber (15) can flow out into an environment with lower pressure, after stopping the supply of further hot gas.

14. The gas generator according to claim 13, **characterized in that** the control device (18) controls the quantity of hot gas flowing into the pressure chamber (15), that the control device (18) also opens and closes the discharge channel (51), and that on shutting off the supply of the hot gas into the pressure chamber (15) also the discharge channel (51) is closed.

15. The gas generator according to any of the preceding claims, **characterized in that** at least one opening (26) is provided between the fluid chamber (14) and the mixing chamber (16), in the region of inflow openings (29) opening into the mixing chamber (16) and intended for hot gas.

16. The gas generator according to claim 15, **characterized in that** the mixing chamber (16) has at least one outlet opening (28) which connects the interior of the mixing chamber (16) with that of the restraint system which is to be filled, that the mixing chamber is an elongated annular chamber which surrounds the fluid chamber (14), and that the outlet opening (28) is arranged in the region of the axial end of the annular chamber opposed to the opening (26) between the mixing chamber (16) and the fluid chamber (14).

17. The gas generator according to any of claims 1 to 15, **characterized in that** the control device (28; 128) is at least one solenoid valve and comprises a spring (30) and a lifting magnet (32).

18. The gas generator according to any of claims 1 to 17, **characterized in that** the fluid is a coolant.

19. The gas generator according to any of claims 1 to 18, **characterized in that** the fluid is a combustible fluid.

20. The gas generator according to any of the preceding claims, **characterized in that** downstream of the fluid chamber (114) a fluid guiding pipe (122) is arranged, in the interior of which the fluid is guided from the fluid chamber (114) to the mixing chamber (116), and that the control valve (128) is situated between the fluid guiding pipe (122) and the fluid chamber (114).

21. The gas generator according to claim 20, **characterized in that** the control valve has a movable slider (130), which is arranged on the fluid guiding pipe (122).

22. The gas generator according to claim 21, **characterized in that** the fluid guiding pipe (122) has flow-through openings (146) which can be opened to a greater or lesser extent by adjusting the slider (130).

23. The gas generator according to claim 21 or 22, **characterized in that** the slider (130) has a tubular part (132) arranged on the fluid guiding pipe (122) and, in a radially outer relation thereto, a tubular part (136) which adjoins a coil (142), the two tubular parts (132, 136) being connected with each other by ribs (134).

## Revendications

1. Générateur de gaz (10) pour un système de sécurité, en particulier pour un système de retenue des occupants d'un véhicule, comportant une chambre de combustion (12 ; 112) remplie de combustible, dans laquelle un gaz chaud est engendré après l'allumage et la combustion du combustible (118), comportant une chambre de liquide (14 ; 114) contenant un liquide et comportant une chambre de mélange (16; 116) dans laquelle le liquide et le gaz chaud sont mélangés, **caractérisé en ce que** le générateur de gaz (10) présente au moins un dispositif de commande qui commande le rapport de mélange du liquide et du gaz chaud dans la chambre de mélange (16 ; 116).

2. Générateur de gaz selon la revendication 1, **caractérisé en ce que** le dispositif de commande est formé par au moins une valve de commande (18).

3. Générateur de gaz selon l'une des revendications 1 ou 2, **caractérisé en ce que** le dispositif de commande commande la quantité de liquide s'écoulant dans la chambre de mélange (16 ; 116).

4. Générateur de gaz selon la revendication 2 et 3, **caractérisé en ce que** le liquide s'écoule à travers la valve de commande (128).

5. Générateur de gaz selon la revendication 4, **caractérisé en ce que** la valve de commande (128) est agencée à une sortie de la chambre de liquide (114).

6. Générateur de gaz selon l'une des revendications précédentes, **caractérisé en ce qu'**il est prévu une chambre de pression (15 ; 115) qui est séparée de la chambre de liquide (14 ; 114) par un piston d'éjection (24 ; 148).

7. Générateur de gaz selon la revendication 6, **caractérisé en ce que** le dispositif de commande est réalisé de telle sorte qu'il commande le rapport de mélange indépendamment de la position du piston d'éjection (24 ; 148).

8. Générateur de gaz selon l'une des revendications 6 et 7, **caractérisé en ce que** du gaz sous pression est introduit dans la chambre de pression (15 ; 115) pour déplacer le piston d'éjection (24).

9. Générateur de gaz selon la revendication 8, **caractérisé en ce que** le dispositif de commande commande la pression dans la chambre de pression (15 ; 115).

10. Générateur de gaz selon la revendication 8 ou 9, **caractérisé en ce qu'**au moins une partie du gaz chaud forme le gaz sous pression et cette partie parvient dans la chambre de pression (15 ; 115) via au moins une conduite.

11. Générateur de gaz selon la revendication 10, **caractérisé en ce que** le dispositif de commande commande la quantité de gaz sous pression s'écoulant dans la chambre de pression (15).

12. Générateur de gaz selon l'une des revendications 10 et 11, **caractérisé en ce que** la conduite est formée par un tube de conduite de gaz (36) à travers lequel, après l'allumage, au moins une partie du gaz chaud provenant de la chambre de combustion (12) s'écoule vers le dispositif de commande.

13. Générateur de gaz selon l'une des revendications 6 à 12, **caractérisé en ce qu'**il est prévu un canal d'évacuation (51 ; 55) partant de la chambre de pression, via lequel du gaz chaud introduit dans la chambre de pression (15) peut s'écouler dans un environnement à pression plus faible, après avoir stoppé l'amenée d'un autre gaz chaud.

14. Générateur de gaz selon la revendication 13, **caractérisé en ce que** le dispositif de commande (18) commande la quantité de gaz chaud s'écoulant dans la chambre de pression (15), **en ce que** le dispositif de commande (18) ouvre et ferme aussi le canal d'évacuation (51), et **en ce que** lorsqu'on bloque l'amenée du gaz chaud dans la chambre de pression (15), le canal d'évacuation (51) aussi est fermé.

15. Générateur de gaz selon l'une des revendications précédentes, **caractérisé en ce qu'**il est prévu entre la chambre de liquide (14) et la chambre de mélange (16) au moins une ouverture (26) pour le gaz chaud dans la région des ouvertures d'écoulement (29) débouchant dans la chambre de mélange (16).

16. Générateur de gaz selon la revendication 15, **caractérisé en ce que** la chambre de mélange (16) présente au moins une ouverture de sortie (28) qui relie l'espace intérieur de la chambre de mélange (16) à celui du système de retenue à remplir, **en ce que** la chambre de mélange est une chambre annulaire allongée qui entoure la chambre de liquide (14) et **en ce que** l'ouverture de sortie (28) est agencée dans la région de l'extrémité axiale de la chambre annulaire, qui est opposée à l'ouverture (26) entre la chambre de mélange (16) et la chambre de liquide (14).

17. Générateur de gaz selon l'une des revendications 1 à 15, **caractérisé en ce que** le dispositif de commande (28 ; 128) est au moins une valve magnétique et comprend un ressort (30) et un aimant de levage (32).

18. Générateur de gaz selon l'une des revendications 1 à 17, **caractérisé en ce que** le liquide est un liquide de refroidissement.

19. Générateur de gaz selon l'une des revendications 1 à 18, **caractérisé en ce que** le liquide est un liquide combustible.

20. Générateur de gaz selon l'une des revendications précédentes, **caractérisé en ce qu'**en aval de la chambre de liquide (114) est agencé un tube de conduite de liquide (122) à l'intérieur duquel le liquide est conduit depuis la chambre de liquide (114) vers la chambre de mélange (116), et **en ce que** la valve de commande (128) est logée entre le tube de conduite de liquide (122) et la chambre de liquide (114).

21. Générateur de gaz selon la revendication 20, **caractérisé en ce que** la valve de commande présente une vanne (130) mobile qui est logée sur le tube de conduite de liquide (122).

22. Générateur de gaz selon la revendication 21, **caractérisé en ce que** le tube de conduite de liquide (122) a des ouvertures d'écoulement (146) qui peuvent être ouvertes plus ou moins amplement par le déplacement de la vanne (130).

23. Générateur de gaz selon la revendication 21 ou 22, **caractérisé en ce que** la vanne (130) a une partie tubulaire (132) logée sur le tube de conduite de liquide (122) et, radialement à celle-ci, une partie tubulaire (136) tubulaire extérieure qui est adjacente à une bobine (142), les deux parties tubulaires (132, 136) étant reliées l'une à l'autre par des nervures (134).
